# EUROPEAN PATENT APPLICATION

(11) **EP 4 632 848 A1**
(43) Date of publication of application: **15.10.2025**
(21) Application number: 25169262.0
(22) Date of filing: 08.04.2025
(51) Int. Cl.: H01M 4/70, H01M 10/0585, H01M 10/0525, H01M 10/04, H01M 4/80, H01M 4/66

(54) **CURRENT COLLECTOR FOR BIPOLAR STACKED BATTERIES**

(30) Priority: 10.04.2024 US 202463632086 P
(71) Applicant: Lasagna.one Inc., San Jose, CA 95134 (US)
(72) Inventor: Ohashi, Akinari, San Jose, 95134 (US); Lin, Xi, San Jose, 95134 (US); Katoh, Yuki, San Jose, 95134 (US)
(74) Representative: London IP Ltd

(57) **Abstract**

A method for forming a bipolar battery may form a mixture of conductive material and non-conductive material. The method may compress an area of the mixture so the conductive material of the mixture comes into contact to form a conductive region and the mixture that is uncompressed form an insulative region of a current collector of the bipolar battery.

## Description

### RELATED APPLICATIONS

This patent application is related to U.S. Provisional Application No. 63/632,086 filed April 10, 2024, entitled "CURRENT COLLECTOR FOR BIPOLAR STACKED BATTERIES", in the names of the same inventors which is incorporated herein by reference in its entirety. The present patent application claims the benefit under 35 U.S.C §119(e) of the aforementioned provisional application.

### TECHNICAL FIELD

This disclosure generally relates to batteries, more particularly, to a current collector for bipolar stack batteries.

### BACKGROUND OF THE INVENTION

Electric vehicles (EVs) have become increasingly prevalent in the market as an alternative to traditional internal combustion vehicles, largely due to their environmentally friendly nature and advanced technological features. The operation of electric vehicles heavily relies on their battery systems, which provide the necessary electrical energy to power the motors.

Conventionally, to generate enough voltage to operate high torque motors in vehicles, many batteries are connected in series. However, this design has several inherent drawbacks. For one, the series stacking of batteries necessitates a significant number of joint parts.

Joint parts not only contribute to a loss of energy density and power density due to volumetric loss, but they also introduce additional resistance, leading to a decrease in power density. Moreover, joint parts tend to focus current around the jointed areas, resulting in inhomogeneous temperature and current distribution across the batteries. This can ultimately contribute to the premature degradation of the battery system.

To address these challenges, bipolar batteries have been developed. In these batteries, a positive electrode and a negative electrode are arranged on both sides of a collector, significantly reducing the need for joint parts.

However, these bipolar batteries come with their own set of problems. Specifically, they present a risk of shortage: if current collectors from different layers come into contact, the battery cells fail to exhibit the necessary voltage, leading to lower overall voltage. Similarly, if the electrolytes of different battery layers touch, the cells likewise fail to produce the required voltage.

US patent publication US2015/0255797A1 discloses covering the edge of a battery unit with an insulating polymer to prevent electrical short circuits. Similarly, Japanese patent JP2011151016A discloses the use of a resin to cover the edges of the bipolar all-solid-state battery to prevent short circuit. Current collector needs to be physically separated. The current collector utilized in the existing solution conducts electrons throughout the whole current collector. That is why edges of the battery unit must be covered by additional insulating part to prevent short circuit caused by the current collector coming in contact.

Existing solutions involve two parts: an insulting part and a current collector. Current collectors in existing solutions conduct electrons through the entirety of their own structure. This poses the risk of short circuit with another current collector within the battery unit, and therefore, an insulating part is inserted into the battery unit to physically maintain a separation between current collectors.

Therefore, it would be desirable to provide a system and method that overcomes the above.

### SUMMARY OF THE INVENTION

This summary is provided to introduce a selection of concepts in a simplified form that are further described below in the DETAILED DESCRIPTION OF THE INVENTION. This summary is not intended to identify key features of the claimed subject matter, nor is it intended to be used as an aid in determining the scope of the claimed subject matter.

In accordance with one embodiment of the present invention, a method for forming a bipolar battery is disclosed. The method may form a mixture of conductive material and non-conductive material. The method may compress an area of the mixture so the conductive material of the mixture comes into contact to form a conductive region and the mixture that is uncompressed form an insulative region of a current collector of the bipolar battery.

In accordance with one embodiment of the present invention, a method for forming a bipolar battery is disclosed. The method may form a current collector. He current collector may be formed of a mixture of conductive material and non-conductive material. The method may compress an interior area of the mixture to form a conductive region, an outer perimeter of the mixture being uncompressed forming an insulative region around an outer perimeter of a current collector.

In accordance with one embodiment of the present invention, a method for forming a bipolar battery is disclosed. The method may form a current collector, the current collector formed of a mixture of conductive material and non-conductive material. The method may compress an interior area of the mixture to form a conductive region, an outer perimeter of the mixture being uncompressed forming the insulative regions around an outer perimeter of the current collector. The method may attach a cathode layer to a first side of the conductive region. The method may attach an anode layer to a second side of the conductive region, wherein the insulative region formed around the outer perimeter of the current collector are insulative and unconnected to the cathode layer and the anode layer.

### BRIEF DESCRIPTION OF THE DRAWINGS

The present application is further detailed with respect to the following drawings. These figures are not intended to limit the scope of the present application but rather illustrate certain attributes thereof. The same reference numbers will be used throughout the drawings to refer to the same or like parts.
FIG. 1 shows a side view of an exemplary current collector used in a bipolar stacked battery in accordance with an embodiment of the disclosure;
FIG. 2 shows a side view of an exemplary current collector used in a bipolar stacked battery being compressed in accordance with an embodiment of the disclosure;
FIG. 3a shows a top view of an exemplary current collector used in a bipolar stacked battery having compressed and non-compressed areas in accordance with an embodiment of the disclosure;
FIG. 3b shows a magnified side view of the non-compressed area of the exemplary current collector of FIG. 3a used in a bipolar stacked in accordance with an embodiment of the disclosure;
FIG. 3c shows a magnified side view of the compressed area of the exemplary current collector of FIG. 3a used in a bipolar stacked in accordance with an embodiment of the disclosure;
FIG. 4a shows a top view of an exemplary current collector used in a bipolar stacked battery before being compressed in accordance with an embodiment of the disclosure;
FIG. 4b shows a top view of an exemplary current collector used in a bipolar stacked battery after being compressed in accordance with an embodiment of the disclosure;
FIG. 5 shows a side view of an exemplary bipolar stacked battery fusing a current collector at a post-compression state in accordance with an embodiment of the disclosure;
FIG. 6 shows a side exploded view of a portion of the bipolar stacked battery of FIG. 5 in accordance with an embodiment of the disclosure;
FIG. 7 shows a side view of an exemplary bipolar stacked battery showing a separation between current collectors in accordance with an embodiment of the disclosure; and
FIG. 8 shows a side view of an exemplary current collector showing a thickness between compressed and non-compressed regions in accordance with an embodiment of the disclosure.

### DETAILED DESCRIPTION OF THE INVENTION

The description set forth below is intended as a description of presently preferred embodiments of the disclosure and is not intended to represent the only forms in which the present disclosure can be constructed and/or utilized. The description sets forth the functions and the sequence of steps for constructing and operating the disclosure. It is to be understood, however, that the same or equivalent functions and sequences can be accomplished by different embodiments that are also intended to be encompassed within the spirit and scope of this disclosure.

In the present disclosure, a bipolar batter may be disclosed wherein only one part may be necessary to fulfill the functions of the insulting part and the current collector. The proposed current collector may be compressible by pressure and only the compressed region may hold electronic conductivity. When the bipolar battery is assembled, the proposed current collector may be compressed at regions in contact with the electrode and separator. Hence the edges of the bipolar battery, where the current collectors may not be in contact with the electrode or the separator may remain uncompressed, and therefore, may remain insulative at the edges.

The present disclosure may allow users to confine electronically conductive regions within the current collector, allowing it to have both conductive and insulating regions. In other words, this current collector may serve as a current collector and as an insulating part. This may help to reduce the number of parts, helping improve yield. In addition, by removing the need for an additional insulation material, the sides of the battery may be an open-ended edge. This may also enable one to prevent air bubbles from being trapped in the battery stack, which may help improve cell performance and yield.

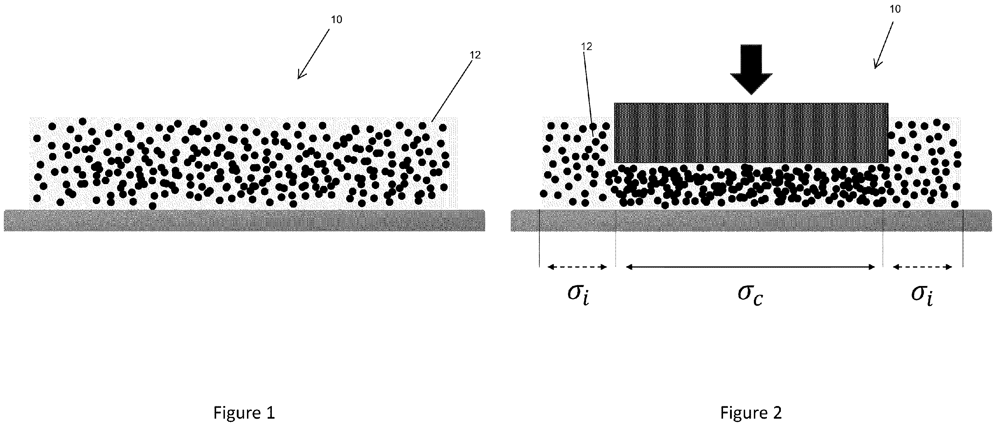

As shown in Figure 1, the current collector 10 may be a composite material 12 made from a mixture of electronically conductive and non-conductive materials, offering unique electrical properties and structural benefits. The conductive materials may include, but not limited to, Cu, Ni, Cr, Au, Pt, Ag, Au, Al, Fe, Ti, Zn, Co and stainless steel or carbon. These conductive materials may come in different forms, like spherical, needle-like, fibrous or other forms. Additionally, combinations of different conductive materials and form may be possible. The non-conductive matrix may include, but is not limited to, plastic materials, such as Polyacrylic acids (PAA), Poly(methyl methacrylate) (PMMA); Acrylonitrile butadiene styrene (ABS); Polyamide (PA); Polyimide (PI); Polyamide-imide (PAI); Polycarbonate (PC); Polyoxymethylene (POM); Polyether ether ketone (PEEK); Polyetherimide (PEI); Polyethylene (PE); Polyethylene terephthalate (PET); Polyphenylene oxide (PPO); Polyphenylene sulfide (PPS); Polypropylene (PP); Polyvinyl chloride (PVC); Polyvinylidene fluoride (PVDF); and Polytetrafluoroethylene (PTFE). These materials may feature side chains modified by functional groups for improved performance. Additionally, the non-conductive component may consist of inorganic materials like SiO2, Al2O3, ZrO2, ZnO, TiO2, Fe2O3, Na2CO3, Na2SO4, MgCO3, MgSO4, CaCO3, CaSO4, S, P2S5, TiS2, and ZnS.

The composition of the composite material 12 made from conductive and non-conductive material within the conductive region may be variable. The volume occupied by the conductive and non-conductive materials may vary, and voids (air pockets) may be included inside the matrix. In addition, dispersion of voids, conductive material, non-conductive material may be variable to optimize and customize the current collector 10 for specific application requirements.

As shown in Figure 2, the current collector 10 may be compressible. When the thickness of the current collector 10 decreases due to compression, the embedded conductive materials come in contact with one another to form a network of conductive paths. The formed conductive network may give the current collector 10 an anisotropic or isotropic conductivity, meaning that the current collector's conductivity may be limited to or differ in different directions or may be conductive in all directions. It may be important to note that this current collector 10 may conduct electrons but not ions.

The thickness of the current collector 10 before (T) and after compression (t) may not be specified since anisotropic properties and conductivities can be regulated with the degree of compression. This flexibility in design may allow for customization according to specific application requirements.

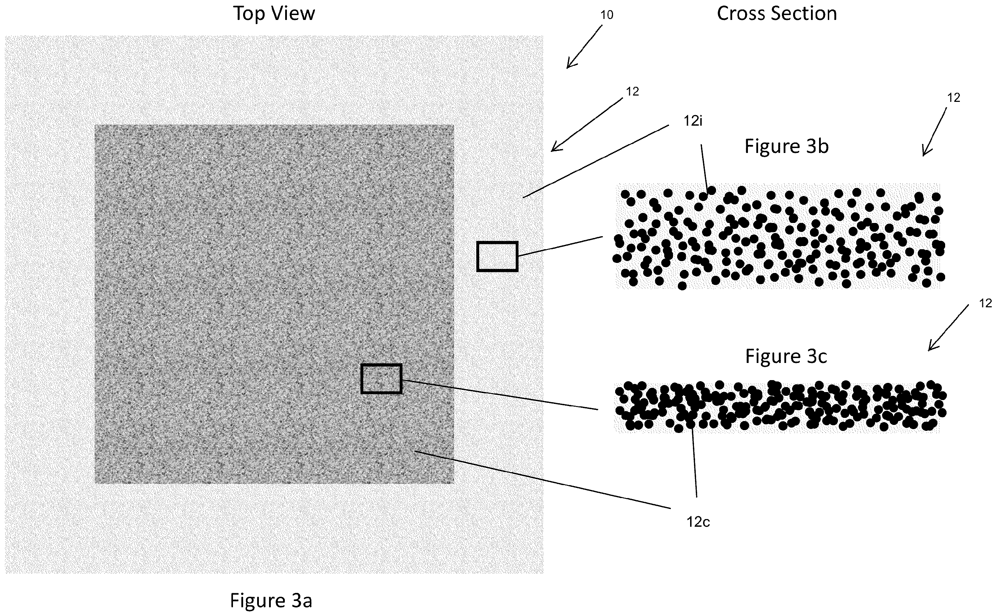

While the compressed area may become conductive regions 12_{c}, regions in the current collector 10 that may not be compressed may remain insulative regions 12ᵢ (See Figure 2 and Figures 3a, 3b, 3c). This may allow the current collector 10 to seamlessly transition from a conductive region 12c to an insulated region 12ᵢ. In accordance with an embodiment, an interior area may form the compressed area and may become conductive regions 12_{c}. An outer perimeter area in the current collector 10 may not be compressed may remain insulative regions 12ᵢ.

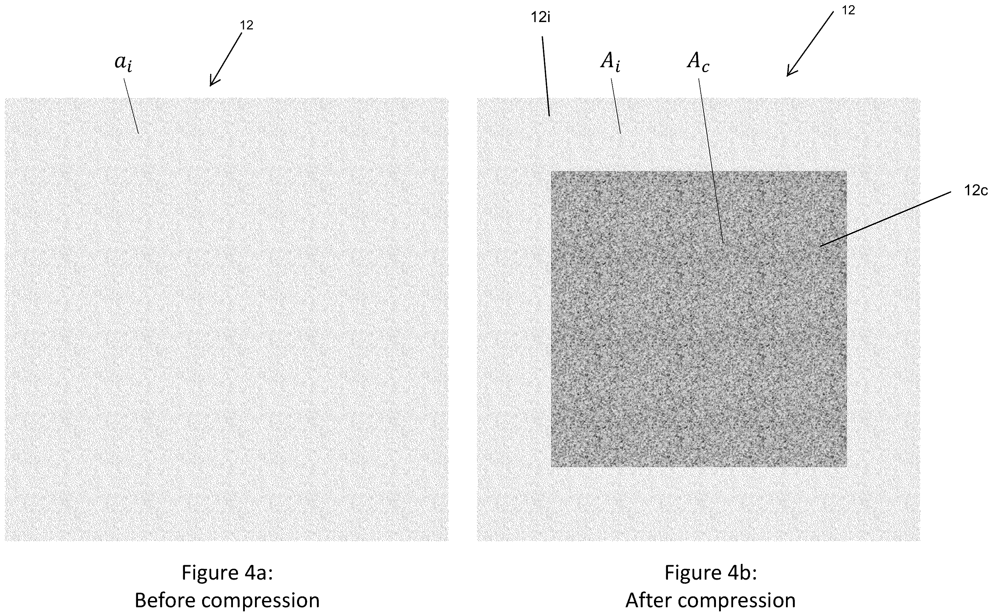

As shown in Figures 4a and 4b, areas of the current collector 10 may or may not differ before and after compression. In the case where the current collector 10 experiences a pressure in the thickness direction of the current collector 10, the current collector 10 may experience an expansion in the planar direction. In general, the more planar expansion the current collector 10 may experience, the thinner the current collector 10 may become. This may help reduce the battery stack's thickness. However, in the case where the current collector 10 consists of voids (porous matrix), the planar expansion can be suppressed. This means that in Figure 4a and 4b, areas before compression (aᵢ) could be the same as the area after compression (Aᵢ).

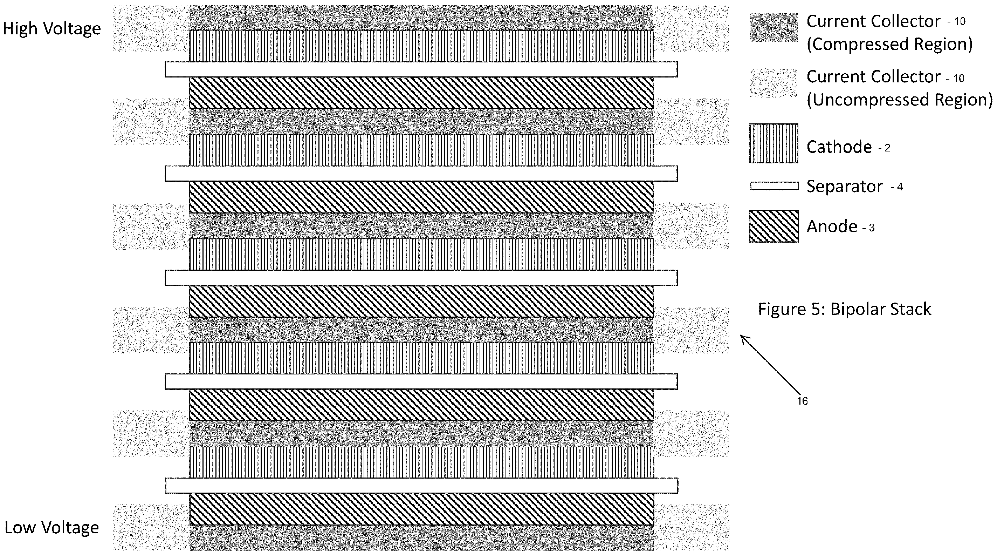

Figure 5 may show a bipolar solid-state battery 16 using a pressure activated current collector 10 described above in a post-compression state. In the direction from high voltage side to low voltage, the bipolar battery 16 stacked battery may consist of a layer of current collector 10, cathode layer 2, separator 4, anode layer 3, and another current collector 10 in repeating order, i.e., 10, 2, 4, 3, 10, 2, 4, 3, 10.... 10, 2, 4, 3, 10.

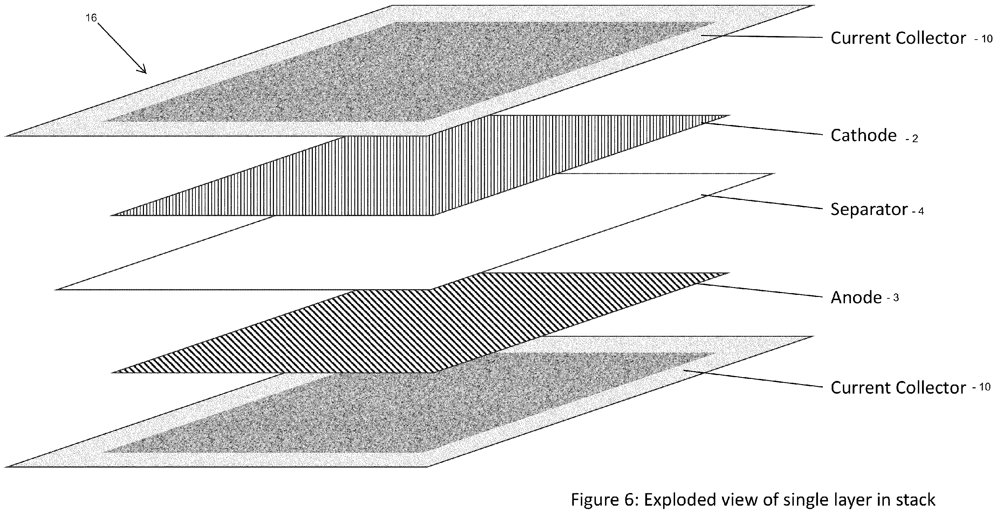

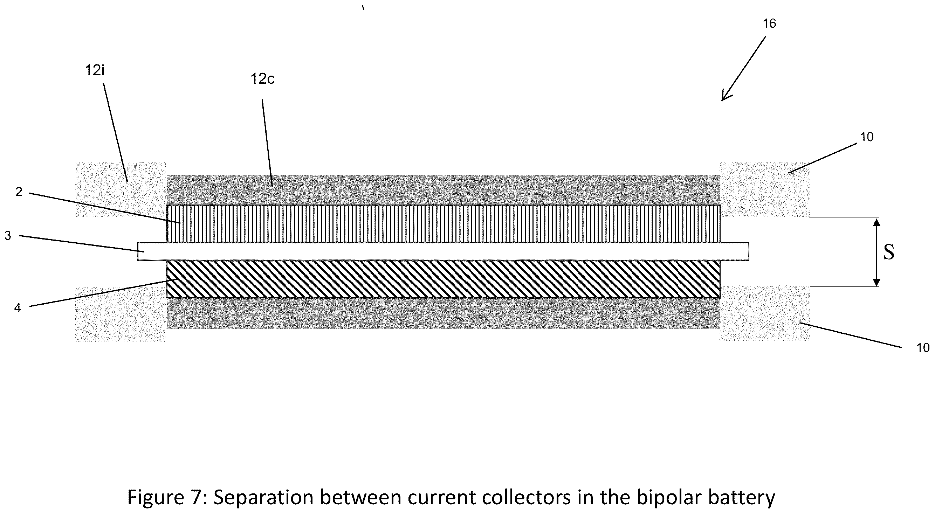

Referring to Figure 6, an exploded view of a portion of the bipolar solid-state battery 16 may be seen. Here, the current collector 10 may have an electronically conductive region 12_{c} and non-conductive insulative regions 12ᵢ. Electronically conductive regions 12_{c} may be regions that are compressed, and those regions may be regions in contact with or in proximity of a cathode layer 2 or an anode layer 3. The outer edges of the current collector 10, which may not be in contact or not in proximity of the cathode layer 2 or anode layer 3 may remain non-conductive and form the insulative regions 12ᵢ. This insulation at the edges of the current collector 10 may eliminate the need for insulation frames, which may be utilized in conventional bipolar cells. For example, existing bipolar battery designs propose the use of resin to physically separate the current collector from creating a short circuit around the edges. However, by utilizing this pressure activated current collector 10, short circuits may be prevented without the need for additional insulation within the bipolar battery 16. Furthermore, as shown in Figure 7, the separation (S) between current collectors 10 can be 0 or greater than 0, since the insulated edges of the current collectors 10 will not cause short circuit even if they come in contact.

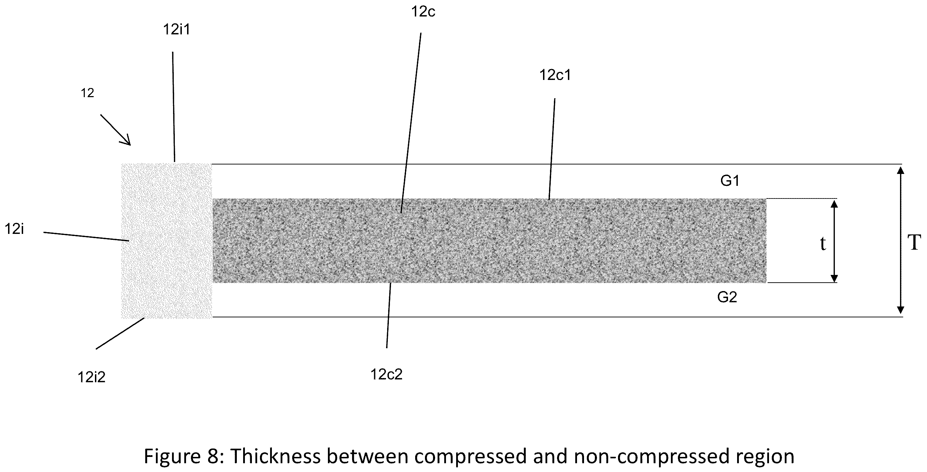

Referring to Figure 8, a side view of the current collector 10 may be shown. In Figure 8, one may see a thickness between compressed and non-compressed regions of the current collector 10. The current collector 10 may have a total thickness of T. The electronically conductive regions 12_{c} that may be compressed may have a thickness of t. electronically conductive regions 12_{c} may be those regions that may be in contact with or in proximity of a cathode layer 2 or an anode layer 3. A first gap G₁ may be formed between a first surface 12_{c1} of the conductive region 12_{c} and a first surface 12ᵢ₁ of the insulative regions 12ᵢ. Similarly, a second gap G₂ may be formed between a second surface 12_{c2} of the conductive region 12_{c} and a second surface 12ᵢ₂ of the insulative regions 12ᵢ.

Referring to Figures 5 - 8, the cathode layer 2 may be a layer containing at least a cathode active material (CAM). Examples of the CAM may include, but are not limited to, layered lithium containing oxide materials, such as LiCoO₂, LiMnO₂, LiNiO₂, LiNiₓMn_{y}Co_{1-x-y}O₂, LiNiₓCo_{y}Al_{1-x-y}O₂, lithium containing phosphate with olivine structure, such as LiFePO₄, LiFeₓMn₁₋ₓPO₄, LiMnPO₄, LiFeₓCo₁₋ₓPO₄, LiCoPO₄, lithium containing oxide materials with spinel structure, such as LiNi_{0.5}Mn_{1.5}O₄, LiMn₂O₄, lithium excess layered structured oxide, such as Li₂MnO₃, Li₂RuO₃, Li₂RuₓTi₁₋ₓO₃, Li₂RuₓSn₁₋ₓO₃, Li₂MnₓTi₁₋ₓO₃, Li₂MnₓSn₁₋ₓO₃, layered lithium containing sulfide materials, such as TiS₂, MoS₂, NbS₂, TaS₂, Sulfur, or lithium containing sulfide with Chevrel structure, such as LiCuₓMoS_{1-z}.

The surface of CAM may be coated by thin layers of materials (coating). Example of the coating may include, but not limited to, crystalline phase, such as Li₂ZrO₃, LiNbO₃, LiPO₃, Li₃PO₄, LiTi₂(PO₄)₃, LiZr(PO₄)₃, ZrO2, Al₂O₃, EtOLi, MtOLi, LiOH, Li₂CO₃ and/or amorphous phase, such as metal alkoxide, or metal phosphate.

Cathode layer 2 may further contain solid electrolytes, binders, electron conductive additives, in addition to CAM.

Examples of electrolytes may include, but are not limited to, organic liquid, organic polymer, and inorganic solids. In general, the electrolytes may be inorganic solids because of the higher transference number of lithium compared to liquid and the higher ionic conductivity than organic polymer. This is also because inorganic solids are usually rigid and do not show liquidity which may be preferred to compose stacked cell without ionic shorting.

In general, examples of the electrolyte may include, but not limited to, the materials that may have composition of Li-P-O-N, Li-Si-O, Li-B-Si-O, Li-B-O, Li-C-B-O, Li-Al-Si-O, Li-Ti-Al-P-O, Li-Zr-Al-P-O, Li-La-Zr-O, Li-La-Ta-Zr-O, Li-La-Nb-Zr-O, Li-M-S (M is B, Al, Si, P, Zn, Ge, Zr, Sn or combination of those), Li-M'-S-O(M' is B, Al, Si, P, Zn, Ge, Zr, Sn or combination of those), Li-P-S-X (X is F, Cl, Br or combination of those), LiP-S-O-X' (X' is F, Cl, Br or combination of those), Li-B-H, Li-B-N-H, Li-B-H-O, Li-B-N-H-O, Li-M"-X" (M is In, Zr, Sc, Ga, Nb, Ta or combination of those; X" is F, Cl, Br or combination of those), Li-M"-X"-O(M" is In, Zr, Sc, Ga, Nb, Ta or combination of those; X" is F, Cl, Br or combination of those).

Examples of a binder that may be contained in the cathode layer 2 may include, but not limited to, butadiene rubber (BR), butyl rubber (IIR), acrylate butadiene rubber (ABR), polyvinylidene difluoride (PVDF), and Polytetrafluoroethylene (PTFE). Side chains of the binder may be modified by functional groups.

In addition, the cathode layer 2 may contain electron conductive additives. For example, various types of carbon may include, but not limited to, acetylene black (AB), Ketjen black (KB), VGCF, carbon nanotubes, carbon nanohorns, graphite, needle-like/fibrous graphite, and fullerenes.

The thickness of the cathode layer 2 may not be specifically limited, but a thicker layer may be preferred when higher capacity is required. For example, the thickness of the cathode layer 2 may be around 0.1 um to 1 mm, and may be preferably around 60 um to 500 um.

The anode layer 3 may be a layer containing at least an anode active material (AAM). Examples of the AAM may include, but not limited to, layered lithium containing sulfide materials, such as TiS₂, MoS₂, NbS₂, TaS₂, titanium containing oxides, such as, Li₄Ti₅O₁₂, TiₓNb_{y}O_{z}, LiₓTi₂(PO₄)₃, tungsten containing oxides, such as Nb₁₆W₅O₅₅, Nb₁₈W₁₆O₉₃, vanadium containing oxide, such as LiVO₂, Artificial carbon (or hard carbon), Graphite, Li-metal alloy, such as LiₓIn, LiₓSn, LiₓSi, LiₓGe, LiₓAl, or metallic lithium.

The anode layer 3 may further contain solid electrolytes, binders, electron conductive additives, in addition to the AAM.

Examples of electrolytes may include, but not limited to, organic liquid, organic polymer, and inorganic solids. In general, the electrolyte may be inorganic solids because of the higher transference number of lithium compared to liquids and higher ionic conductivity than organic polymer. This is also because inorganic solids are usually rigid and do not show liquidity which may be preferred to compose stacked cell without ionic shorting.

In general, examples of electrolytes may include, but not limited to, the materials that may have composition of Li-P-O-N, Li-Si-O, Li-B-Si-O, Li-B-O, Li-C-B-O, Li-Al-Si-O, Li-Ti-Al-P-O, Li-Zr-Al-P-O, Li-La-Zr-O, Li-La-Ta-Zr-O, Li-La-Nb-Zr-O, Li-M-S (M is B, Al, Si, P, Zn, Ge, Zr, Sn or combination of those), Li-M'-S-O(M' is B, Al, Si, P, Zn, Ge, Zr, Sn or combination of those), Li-P-S-X (X is F, Cl, Br or combination of those), LiP-S-O-X' (X' is F, Cl, Br or combination of those), Li-B-H, Li-B-N-H, Li-B-H-O, Li-B-N-H-O, Li-M"-X" (M" is In, Zr, Sc, Ga, Nb, Ta or combination of those; X" is F, Cl, Br or combination of those), Li-M"-X"-O(M" is In, Zr, Sc, Ga, Nb, Ta or combination of those; X" is F, Cl, Br or combination of those).

Examples of a binder that may be contained in the anode layer 3 may include, but not limited to, butadiene rubber (BR), butyl rubber (IIR), acrylate butadiene rubber (ABR), polyvinylidene difluoride (PVDF), Polytetrafluoroethylene (PTFE). Side chains of the binder may be modified by functional groups.

In addition, the anode layer 3 may contain an electron conductive additive. For example, various types of carbon may include acetylene black (AB), Ketjen black (KB), VGCF, carbon nanotubes, carbon nanohorns, graphite, needle-like/fibrous graphite, and fullerenes.

The thickness of the anode layer 3 may not specifically be limited, but a thicker layer may be preferred when higher capacity is required. For example, the thickness of the anode layer 3 may be around 0.1 um to 1 mm, and may be preferably around 60 um to 500 um.

The separator 4 may be an electron insulator and an ionic conductor. The electrolyte can be either organic liquid, organic polymer or inorganic solid. If an organic based electrolyte (liquid or polymer) is chosen, the separator 4 might be a porous membrane consisting of polymers such as Polyethylene (PE), Polypropylene (PP) and combination of those. The membrane may be immersed by an organic based electrolyte.

In general, the separator 4 may consist of inorganic solids because of the higher transference number of lithium compared to liquid and higher ionic conductivity than organic polymer. This is also because inorganic solids are usually rigid and do not show liquidity which may be preferred to compose stacked cell without ionic shorting.

Examples of the electrolyte may include, but is not limited to, organic liquid, organic polymer, inorganic solids. In general, the electrolyte may be inorganic solids because of the higher transference number of lithium compared to liquid and higher ionic conductivity than organic polymer. This is also because inorganic solids are usually rigid and do not show liquidity which is preferred to compose stacked cell without ionic shorting.

Some examples of the electrolyte may include materials that may have compositions of Li-P-O-N, Li-Si-O, Li-B-Si-O, Li-B-O, Li-C-B-O, Li-Al-Si-O, Li-Ti-Al-P-O, Li-Zr-Al-P-O, Li-La-Zr-O, Li-La-Ta-Zr-O, Li-La-Nb-Zr-O, Li-M-S (M is B, Al, Si, P, Zn, Ge, Zr, Sn or combination of those), Li-M'-S-O(M' is B, Al, Si, P, Zn, Ge, Zr, Sn or combination of those), Li-P-S-X (X is F, Cl, Br or combination of those), Li-P-S-O-X' (X' is F, Cl, Br or combination of those), Li-B-H, Li-B-N-H, Li-B-H-O, Li-B-N-H-O, Li-M"-X" (M" is In, Zr, Sc, Ga, Nb, Ta or combination of those; X" is F, Cl, Br or combination of those), Li-M"-X"-O(M" is In, Zr, Sc, Ga, Nb, Ta or combination of those; X" is F, Cl, Br or combination of those).

The solid electrolyte layer may contain a binder in addition to the above-mentioned solid electrolyte material. Examples of a binder that may be contained in the cathode layer 2 may include, but is not limited to, butadiene rubber (BR), butyl rubber (IIR), acrylate butadiene rubber (ABR), polyvinylidene difluoride (PVDF), and Polytetrafluoroethylene (PTFE). Side chains of the binder may be modified by functional groups.

The thickness of the separator 4 may not be specifically limited, but a thinner layer may be preferred when higher capacity is required. For example, the thickness of separator 4 may be between 0.1 um to 1 mm, and may be preferably around 0.1 um to 50 um.

The present disclosure provides a system and method for forming a current collector 10. The current collector 10 may be formed of a conductive material and a non-conductive material. The current collector 10 may acquire electronic conductivity only at compressed regions. However, the current collector 10 may remain ionically insulative throughout its structure. The current collector 10 may have an electronically conductive region and an insulating region at the same time. The insulating region may be both electronically and ionically insulating. After compression of the current collector 10, the conductive particles within may form a network of conductive paths, which may give the current collector an anisotropic or isotropic conductivity. For example, the current collector's conductivity may be limited to or differ in different directions or may be conductive in all directions. The thickness after compression (t) must be less than the thickness after compression (T). Namely, t < T. Spacing in between the edges of the current collectors after compression (S) can be 0 or greater; namely, S ≥ 0. For example, the edges of the current collector that did not experience compression can come in contact without causing a short circuit since it remains insulated. However, edges of the current collector 10 can be physically separated as well. For example, the increased thickness of electrodes or separator sandwiched in between current collectors 10 may create a gap in between the edges of the current collector 10.

The foregoing description is provided to enable any person skilled in the relevant art to practice the various embodiments described herein. Various modifications to these embodiments will be readily apparent to those skilled in the relevant art, and generic principles defined herein can be applied to other embodiments. Thus, the claims are not intended to be limited to the embodiments shown and described herein, but are to be accorded the full scope consistent with the language of the claims, wherein reference to an element in the singular is not intended to mean "one and only one" unless specifically stated, but rather "one or more." All structural and functional equivalents to the elements of the various embodiments described throughout this disclosure that are known or later come to be known to those of ordinary skill in the relevant art are expressly incorporated herein by reference and intended to be encompassed by the claims. Moreover, nothing disclosed herein is intended to be dedicated to the public.

## Claims

1. A method for forming a bipolar battery comprising:
forming a mixture of conductive material and non-conductive material;
compressing an area of the mixture so the conductive material of the mixture comes into contact to form a conductive region and the mixture that is uncompressed form an insulative region of a current collector of the bipolar battery.

2. The method of Claim 1, comprises compressing the conductive material of the mixture so the conductive region has one of anisotropic or isotropic conductivity.

3. The method of any previous claim, wherein the conductive material comprises at last one of: Cu, Ni, Cr, Au, Pt, Ag, Au, Al, Fe, Ti, Zn, Co and stainless steel, carbon, or combinations thereof.

4. The method of any previous claim, comprising coating particles of non-conductive material with conductive materials, wherein the conductive material is one of: Cu, Ni, Cr, Au, Pt, Ag, Au, Al, Fe, Ti, Zn, Co, stainless steel, carbon, or combinations thereof.

5. The method of Claim 4, wherein the non-conductive material is one of: Polyacrylic acids (PAA), Poly(methyl methacrylate) (PMMA), Acrylonitrile butadiene styrene (ABS), Polyamide (PA), Polyimide (PI), Polyamide-imide (PAI), Polycarbonate (PC), Polyoxymethylene (POM), Polyether ether ketone (PEEK), Polyetherimide (PEI), Polyethylene (PE), Polyethylene terephthalate (PET), Polyphenylene oxide (PPO), Polyphenylene sulfide (PPS), Polypropylene (PP), Polyvinyl chloride (PVC), Polyvinylidene fluoride (PVDF), Polytetrafluoroethylene (PTFE), SiO2, Al2O3, ZrO2, ZnO, TiO2, Fe2O3, Na2CO3, Na2SO4, MgCO3, MgSO4, CaCO3, CaSO4, S, P2S5, TiS2, ZnS, and combination thereof.

6. The method of any previous claim, wherein the non-conductive material comprises at least one of Polyacrylic acids (PAA), Poly(methyl methacrylate) (PMMA), Acrylonitrile butadiene styrene (ABS), Polyamide (PA), Polyimide (PI), Polyamide-imide (PAI), Polycarbonate (PC), Polyoxymethylene (POM), Polyether ether ketone (PEEK), Polyetherimide (PEI), Polyethylene (PE), Polyethylene terephthalate (PET), Polyphenylene oxide (PPO), Polyphenylene sulfide (PPS), Polypropylene (PP), Polyvinyl chloride (PVC), Polyvinylidene fluoride (PVDF), Polytetrafluoroethylene (PTFE), and combinations thereof.

7. The method of any previous claim, wherein the non-conductive material comprises at least one of: SiO2, Al2O3, ZrO2, ZnO, TiO2, Fe2O3, Na2CO3, Na2SO4, MgCO3, MgSO4, CaCO3, CaSO4, S, P2S5, TiS2, ZnS, and combination thereof.

8. The method of any previous claim, wherein the mixture comprises porous materials to reduce expansion during compression of the mixture.

9. The method of any previous claim, comprising compressing an interior area of the mixture to form the conductive region, an outer perimeter of the mixture being uncompressed forming the insulative regions around an outer perimeter of the current collector.

10. The method of any previous claim, comprising compressing an interior area of the mixture to form the conductive region, an outer perimeter of the mixture being uncompressed forming the insulative regions around an outer perimeter of the current collector, wherein a first gap is formed between a first surface of the conductive region and a first surface of the insulative regions, and a second gap is formed between a second surface of the conductive region and a second surface of the insulative regions.

11. The method of any previous claim, comprising:
attaching a cathode layer to a first side of the conductive region; and
attaching an anode layer to a second side of the conductive region.

12. The method of any previous claim, comprising:
attaching a cathode layer to a first side of the conductive region; and
attaching an anode layer to a second side of the conductive region;
wherein the insulative region formed around the outer perimeter of the current collector are insulative and unconnected to the cathode layer and the anode layer.
